# EUROPÄISCHE PATENTSCHRIFT

(11) **EP 1 768 775 B1**
(45) Veröffentlichungstag und Bekanntmachung des Hinweises auf die Patenterteilung: **23.01.2008**
(21) Anmeldenummer: 05772235.7
(22) Anmeldetag: 02.07.2005
(51) Int. Cl.: B01J 19/18, C08G 63/78

(54) **VERFAHREN UND VORRICHTUNG ZUR ABSATZWEISEN HERSTELLUNG VON POLYMEREN DURCH SCHMELZEKONDENSATION**
METHOD AND DEVICE FOR THE GRADUAL PRODUCTION OF POLYMERS USING MELT CONDENSATION
PROCEDE ET DISPOSITIF POUR PRODUIRE GRADUELLEMENT DES POLYMERES PAR CONDENSATION DE FUSION

(30) Priorität: 17.07.2004 DE 102004034708
(43) Veröffentlichungstag der Anmeldung: 04.04.2007
(73) Patentinhaber: Lurgi Zimmer GmbH, 60295 Frankfurt am Main (DE)
(72) Erfinder: KÄMPF, Rudolf, 63584 Gründau (DE)
(74) Vertreter: Meyer-Dulheuer, Karl-Hermann
(86) Internationale Anmeldenummer: PCT/EP2005/007171
(87) Internationale Veröffentlichungsnummer: WO 2006/007966

(56) Entgegenhaltungen:
- EP-A- 0 764 672
- WO-A-01/51199
- WO-A-20/04096893
- WO-A-20/05023905
- US-A- 3 220 804
- US-A1- 2001 029 289

## Beschreibung

Gegenstand der Erfindung ist ein Verfahren und eine Vorrichtung zur absatzweisen Herstellung von hochmolekularen Polyphosphonaten, Polysulfonen, Polyarylaten, Polyamiden, Polyarylenethern oder Polyetherketonen durch Schmelzekondensation einer Hydroxyl-, Carboxyl-, Anhydrid-, Phosphorsäure-, Phosphono-, Phosphonat-, Phosphino-, Phosphinat-, Carbonyl-, Sulfonyl-, Sulfonat-, Siloxan- oder Aminogruppen tragenden monomeren Verbindung mit sich selbst oder mit mindestens einem Diphenol, Dialkohol, Diamin oder einer Dicarbonatkomponente.

Die Erfindung betrifft außerdem ein Verfahren zum Herstellen von Polymeren und Copolymeren mit lang- oder kurzkettigen Einfach oder Mehrfachverzweigungen, die sternförmige, kammartige, strauchartige, baumartige oder dendrimerförmige Verzweigungsstrukturen in regelmäßiger oder statistischer Verteilung aufweisen.

Aus der Patentanmeldung US 2001/0029289 ist ein Verfahren zur Herstellung von Polytrimethylen Terephthalat (PTT) bekannt, bei welchem die Veresterung in mindestens zwei Stufen erfolgt, an die sich schließlich die Präkondensation und die Polykondensation anschließen. Die Terephthalsäure und das Trimethylenglykol werden in einem bestimmten Verhältnis der ersten Veresterungsstufe zugegeben und in den verschiedenen Prozessstufen zum Polymeren verarbeitet, wobei im Prozess von der ersten Veresterungsstufe, über die zweite Veresterungsstufe, die Präkondensation bis zur Polykondensation eine Drucksenkung stattfindet. Zersetzungsreaktionen des Polymers werden durch die Kontrolle der Wandtemperaturen der verwendeten Reaktionsgefäße und durch Zugabe von phosphorhaltigen Zusätzen und anderen Stabilisatoren reduziert.

Die Anmeldung WO 01/51199 beschreibt ein Verfahren zur Herstellung von Granulat aus Polykondensationspolymeren durch Vorkondensation und nachfolgende Polykondensation mit anschließender Granulierung. Die Vorkondensation findet bei höherem Druck als die Polykondensation statt, während es sich mit der Temperatur umgekehrt verhält. Thermischer Abbau des Polymeren wird in Verbindung mit einem Viskositätsgradienten im Reaktor dazu eingesetzt ein viskositätskonstantes Produkt herzustellen. Unter Verwendung eines speziellen Ringscheibenreaktors erfolgt der Prozess nach WO 01/51199 bei verkürzten Reaktionszeiten und geringeren Temperaturen, was zu einer reduzierten thermischen Belastung des Produkts führt.

In WO 2005/023905 wird ein Verfahren zur kontinuierlichen Herstellung von Polymeren durch Schmelzkondensation offenbart. In den Prozessschritten von der Veresterung über die Vorkondensation, der Polykondensation und schließlich der End-Polykondensation finden eine Temperaturerhöhung und eine Druckverminderung statt. Zwecks geringerer thermischer Belastung können bei der Vorkondensation geringere Temperaturen eingestellt werden oder die Temperatur des Zwischenprodukts kann vor Eintritt in die Polykondensation bzw. die End-Polykondensation durch Rohrbegleitkühlung oder einen Wärmetauscher erniedrigt werden. Außerdem sind Scherelemente zum Reinigen der Reaktorwände und Rührscheiben im Polykondensationsreaktor vorgesehen, um die Durchmischung der höher viskosen Zwischenprodukte zu verbessern und somit Abbaureaktionen entgegenzuwirken.

Bei dem aus der DE 3 111 653 bekannten Verfahren zur Herstellung von Polyphosphonaten werden nach Vorschriften und Verfahren, wie sie im Labormaßstab üblich sind, aus Dihydroxy-diphenyl oder anderen Bisphenolen oder Phenylestern der Methylphosphonsäure in mehreren stufenweise ablaufenden Verfahrensschritten Polyphosphonate erzeugt. Beispiele zu anderen in Labormaßstab hergestellten Polymeren befinden sich in D. Braun, H. Cherdron, H. Ritter "Praktikum der makromolekularen Stoffe", Wiley-VCH Verlag, Weinheim, 1999. In diesen Veröffentlichungen werden im Labormaßstab Destillationen und Verfahren unter Druckabsenkung bei gleichzeitigem Durchleiten von Stickstoff beschrieben. Diese Verfahren sind mit erheblichen Kosten und einem Aufwand verbunden, der nur im Labormaßstab tragbar sind. Dabei lässt sich ein günstiges Verhältnis von Volumen zur Wandfläche und damit sehr gute Wärmeübertragungsraten erzielen, wie sie in einem technischen Apparat praktisch nie er-reicht werden können. So nimmt beispielsweise das Volumen mit der dritten Potenz des Radius zu, während die Wandfläche nur mit dem Quadrat des Radius steigt. Beispielsweise beträgt das Verhältnis von Volumen zur Wandfläche für einen zur Hälfte gefüllten 1 I Rundkolben 1,9 und für einen halb gefüllten 2000 I Kugelbehälter 2,6. Dadurch müssen entweder längere Verweilzeiten in Kauf genommen oder durch Wärme übertragende Einbauten Flächenverluste ausgeglichen werden. Werden bei der Reaktion auch Spaltprodukte abgegeben, die aus der Reaktionsmasse herausdiffundieren müssen, so nimmt auch hier die Fläche im Verhältnis zum Volumen ab. Das führt entweder zu längeren Verweilzeiten oder zum Einbau von Elementen wie Rührorganen, die eine stärke Umwälzung des Reaktionsvolumens bewirken.

Es ist deshalb verständlich, dass die Übertragung eines im Labormaßstab durchgeführten Verfahrens auf technische Produktionsanlagen meist nicht direkt erfolgen kann und Änderungen im Verfahrensablauf zwingend notwendig werden. In vielen Fällen, insbesondere bei der Herstellung von Polymeren, kann es nicht in Kauf genommen werden, mit längeren Verweilzeiten zu arbeiten, da es dann bei den üblicherweise angewendeten hohen Temperaturen zu Zersetzungen und Abbaureaktion des Polymeren kommt.

Es stellte sich die Aufgabe, den Ablauf des Verfahrens und die Konstruktion der hierfür eingesetzten Vorrichtung so aufeinander abzustimmen, dass es noch weniger bzw. nicht zu Zersetzungen und Abbaureaktionen des Polymeren kommt. Das erfindungsgemäße Verfahren zeichnet sich deshalb dadurch aus, dass bei kurzen Verweilzeiten unter Vakuum die durch Schmelzekondensation aus Monomeren hergestellten Polymere praktisch keine Verfärbungen und keinen Gelgehalt aufweisen. Dies wird dadurch erreicht, dass in einem mehrstufigen Verfahren zuerst bei niedrigen Temperaturen unter geringer thermischer Belastung ein Vorkondensat erzeugt wird, das dann bei höheren Temperaturen in speziellen Reaktoren einer Poly- und Endkondensation unterworfen wird, wobei eine Zugabe von Monomeren in Abhängigkeit einer kontinuierlichen Messung der Eigenschaften des Kondensats erfolgt.

Es hat sich gezeigt, dass die bei der absatzweise betriebenen Vorkondensation und bezüglich Umsatz und Verweilspektrum von Schmelzen bewährten Rührkessel oder Rührkesselkaskaden für hochviskose Produkte nicht die optimale Lösung darstellen. Zu berücksichtigen ist auch, dass bei sehr großen Reaktionsvolumina die Wirksamkeit des Rührers und die eine Umlaufströmung behindernden Einbauten ebenfalls einen wesentlichen Einfluss auf die Verteilung der Monomeren und der Polykondensate im Reaktionsraum haben. Bei Polymerisationen mit Neigung zu Nebenreaktionen, die im Besonderen die Farbqualität verschlechtern, ist ein zu langes Verweilen in schlecht durchströmten Reaktoren und an Wärmeaustauscherflächen schädlich. Ist die Verweilzeit an solchen Stellen zu lang, tritt insbesondere bei Polykondensationsreaktionen in Konkurrenz zum Kettenwachstum ein Abbau an den Polymerketten auf.

Die meisten Kunststoffe weisen die unangenehme Eigenschaft auf, im Brandfalle zu schmelzen und abzutropfen.

Diese Nachteile lassen sich durch den Einbau von Verzweigermolekülen in die Polymerkette und in die Verzweigungen vermeiden. Durch Zugabe von Verzweigern können die rheologischen Eigenschaften derart verändert werden, dass ein Abtropfen unter Hitzeeinwirkung nicht mehr stattfinden kann.

Außerdem lassen sich durch die Zahl und die Art der Verzweigungspunkte kamm-, strauch-, und/oder stemartige Polymergerüste erzeugen, denen spezielle Eigenschaften anhaften. So sind insbesondere wenige langkettige Verzweigungen geeignet, das rheologische Erholungsholungsvermögen beim Folienblasen, auch als Zwiebelbildung bezeichnet, dahingehend günstig zu beeinflussen, dass sich besonders dünne und stabile Filme ausziehen oder Stegglasplatten extrudieren lassen.

Der Erfindung liegt die Aufgabe zugrunde, Polyphosphonate, Polysulfone, Polyarylate, Polyamide, Polyarylenether oder Polyetherketone mit möglichst einheitlicher und enger Molekulargewichtsverteilung durch Schmelzekondensation zu erzeugen. Die erhaltenen Produkte sollen keine schwarzen Partikel, höchstens eine ganz geringe Gelbfärbung und trotz lang- oder kurzkettiger Verzweigungen praktisch keinen Gelgehalt aufweisen.

Gelöst wird diese Aufgabe durch ein Verfahren zur absatzweisen Herstellung von hochmolekularen Polyphosphonaten, Polysulfonen, Polyarylaten, Polyamiden, Polyarylenethern oder Polyetherketonen durch Schmelzkondensation einer Hydroxyl-, Carboxyl-, Anhydrid-, Phosphorsäure-, Phosphono-, Phosphonat-, Phosphino-, Phosphinat-, Carbonyl-, Sulfonyl-, Sulfonat-, Siloxan- oder Aminogruppen tragenden monomeren Verbindung mit sich selbst oder mit mindestens einem Diphenol, Dialkohol, Diamin oder einer Dicarbonatkomponente bei dem man
a) in einem absatzweise betriebenen ersten Reaktor 1 in Gegenwart eines Veresterungs- und Umesterungskatalysators eine Veresterung oder Umesterung sowie eine Vorkondensation durchführt;
b) dann gegebenenfalls in einem absatzweise betriebenen Zwischenreaktor 6, ggf. unter Zugabe eines oder mehrerer weiterer Monomerer, eines weiteren Katalysators und Additiven eine Polykondensation bis zum Erreichen eines vorbestimmten Polykondensations- oder Viskositätsgrades vornimmt und schließlich
c) in einem absatzweise betriebenen Endreaktor (12) die Polyumesterung bis zum Erreichen des gewünschten Polykondensations- oder Viskositätsgrades fortsetzt,
d) gegebenenfalls Verzweigermoleküle, die mehr als zwei funktionelle Gruppen aufweisen,
   - vor oder während der Veresterung oder Umesterung,
   - vor oder während der gegebenenfalls im Zwischenreaktor durchgeführten Polykondensation oder
   - vor oder während der im Endreaktor durchgeführten Polykondensation zusetzt,
   wobei man eine Verweilzeit in den Reaktoren zwischen 5 Minuten und 15 Stunden einhält, die Temperatur in den Reaktoren 1 und 6 auf 180 bis 300°C und im Reaktor 12 auf 240 bis 400°C einstellt und unter Absaugen der bei der Kondensation entstehenden Dämpfe den Druck im Reaktor 1 und im Zwischenreaktor 6 im Lauf der Verweilzeit kontinuierlich von 2000 bis auf 100 mbar und im Endreaktor 12 von 100 bis auf 0,1 mbar absenkt, wobei im Verfahren eine Zugabe von Monomeren in Abhängigkeit einer kontinuierlichen Messung der Eigenschaften des Kondensats erfolgt.

Unter den gegebenen Bedingungen entstehen dabei im Zwischenreaktor 6 vor allem strauchartige lang- und kurzkettige Verzweigungen, während im Endreaktor 12 statistische und kammartige Verzweigungen gebildet werden.

Ein bevorzugtes Verfahren besteht darin, dass man das im ersten Reaktor (1) gewonnene Vorkondensat unter gleichzeitiger Zugabe eines oder mehrerer weiterer Monomeren, eines weiteren Katalysators und gegebenenfalls etwaiger Additive und unter Verzicht auf den Zwischenreaktor (6) unmittelbar dem Endreaktor (12) zuführt und dort eine Polykondensation bis zum Erreichen eines vorbestimmten Polykondensations- oder Viskositätsgrades vornimmt, wobei die während der Kondensationsreaktionen mit den gebildeten Spaltprodukten entweichenden Monomeren als Kondensate gesammelt und dann destillativ aufgearbeitet werden.

Ein weiteres bevorzugtes Verfahren zeichnet sich dadurch aus, dass man die bei der Herstellung des Vorkondensats im ersten Reaktor (1) zusammen mit den Spaltprodukten als Brüden entweichenden Monomeren dem ersten Reaktor (1) wieder zuführt, während man die Spaltprodukte als Kondensate ausschleust und das im ersten Reaktor gebildete Vorkondensat nach Zugabe eines oder mehrerer weiterer Monomeren, eines weiteren Katalysators und gegebenenfalls etwaiger Additive und unter Verzicht auf den Zwischenreaktor (6) unmittelbar dem Endreaktor (12) zuführt und dort eine Polykondensation bis zum Erreichen eines vorbestimmten Polykondensations- oder Viskositätsgrades vornimmt.

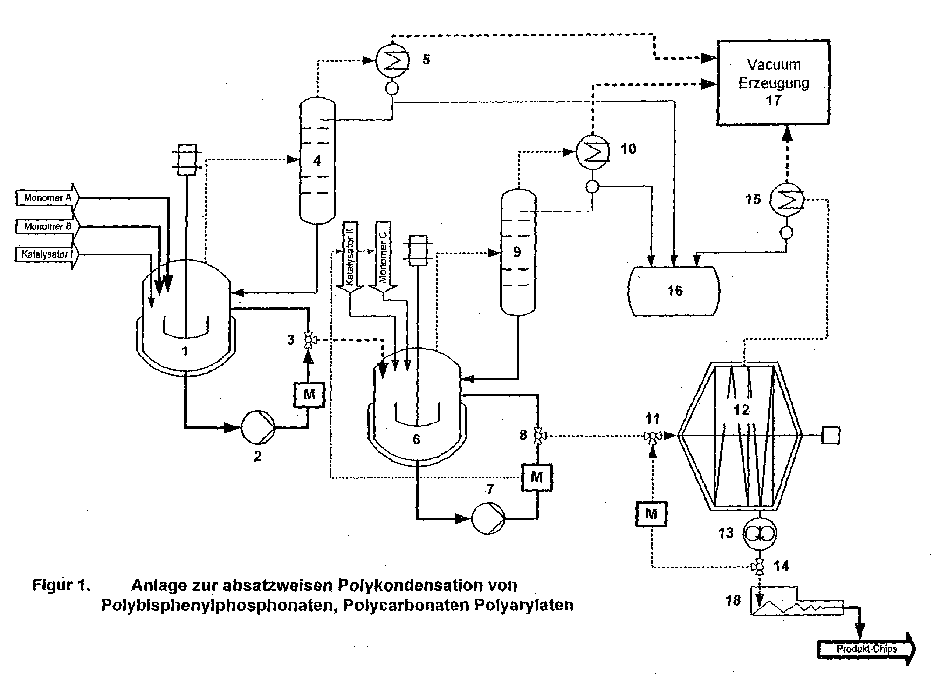

Diese Verfahren werden beispielhaft durch die Fig. 1, 2 und 3 dargestellt.

Dabei fördert man den oder die Monomeren absatzweise über Füllschleusen unter inerter Atmosphäre in Monomervorlagen (in den Fig. nicht abgebildet). Von diesen Vorlagen aus werden dann fest vorgegebene, durch die Menge des absatzweise herzustellenden Polymers bestimmte Massen, soweit sie bei der Umgebungstemperatur als Feststoff vorliegen, als pulverförmige Monomere in den ersten Reaktor 1 eingespeist. Bei Umgebungstemperatur flüssig vorliegende Monomere gelangen aus inertisierten Vorlagen mittels gasdichter Förderorgane in den Reaktor 1. Je nach Flüchtigkeit der Monomere bei den angestrebten Reaktionsbedingungen wird eine das äquimolare Molverhältnis 1:1 überschreitende Dosierung der Monomeren vorgenommen. Um die Konzentration der während der Reaktion zusammen mit den Spaltprodukten entweichenden Monomeren konstant aufrecht zu erhalten, werden die Brüden einer Rektifikationskolonne 4 zugeführt. Der Betrieb dieser Kolonne wird so geführt, dass die schwerer flüchtigen Monomeren sich im Sumpf sammeln und dem Reaktor 1 wieder zugeleitet werden. Die leichter flüchtigen Spaltprodukte gelangen zum Kopf der Kolonne 4, werden im Kondensator 5 nieder geschlagen und als Teilstrom der Kolonne 4 als Rücklauf wieder zugeführt. Das Rücklaufverhältnis ist abhängig von der Effektivität der Abscheidung der Monomeren durch die Kolonne 4. Natürlich werden sich bei zunehmendem Umsatz in einem absatzweisen Betrieb die Molverhältnisse von Spaltprodukt und Monomer in den Brüden ändern, so dass die Betriebsbedingungen diesen Gegebenheiten folgen müssen.

In der Veresterungs- und/oder Umesterungsstufe im Reaktor 1 findet bei höherer Temperatur und in Anwesenheit eines geeigneten Katalysators die erste Reaktion statt. Das aus diesem Reaktor erhaltene Veresterungs- oder Umesterungsprodukt wird gemäß Fig. 1 durch die Pumpe 2 und das Ventil 3 so lange im Kreis gefahren, bis eine festgelegte Verweilzeit erreicht ist und das Produkt durch Umschalten des Ventils 3 den Zwischenreaktor 6 zugeführt werden kann, wo weitere Monomere, beispielsweise solche Monomere mit tri-, tetra- und/oder höher funktionellen Gruppen, auf einmal oder nacheinander zugegeben werden können. Dabei werden erfindungsgemäß die sich ständig ändernden Eigenschaften des durch die Pumpe 7 und das Ventil 8 fließenden Produkts beispielsweise durch kontinuierliche Messung der rheologischen Eigenschaften gemäß der deutschen Patentanmeldung DE 102 00 228, der Änderung des Druckwellenverhaltens gemäß der deutschen Patentanmeldung DE 103 47 826 oder der Änderung der spektroskopischen Eigenschaften nach der Methode der bekannten FTIR-, NIR-UV-Spektroskopie überwacht. Besonders vorteilhaft wird dabei die Zugabe der modifizierenden Monomeren durch laufende Kontrolle der Eigenschaften des Polykondensats gesteuert.

Die während dieser Nach- und/oder Folgereaktion mit dem vorreagierten Produkt frei werdenden zusätzlichen Spaltprodukte enthalten auch noch Anteile der zugegebenen Monomere. Um eine wirtschaftliche Nutzung dieser meist sehr kostspieligen Produkte zu gewährleisten und sie nicht aus einer starken Verdünnung mit den Spaltprodukten zurückgewinnen zu müssen, werden die Brüden einer Rektifikationskolonne 9 zugeführt. Der Betrieb der Kolonne 9 wird so geführt, dass die schwerer flüchtigen Monomere sich im Sumpf sammeln und dem Reaktor 9 wieder zugeleitet werden. Die leichter flüchtigen Spaltprodukte gelangen zum Kopf der Kolonne 9, werden im Kondensator 10 nieder geschlagen und als Teilstrom der Kolonne 9 dem Rücklauf wieder zugeführt. Das Rücklaufverhältnis, bestimmt durch den Teil des Produkts nach 9 zu dem Teil, der dem Sammelbehälter 16 zugeführt wird, ist abhängig von der Effektivität der Abscheidung der Monomeren durch die Kolonne 9. Natürlich werden bei zunehmendem Umsatz in einem absatzweisen Betrieb die Molverhältnisse von Spaltprodukt und Monomer in den Brüden sich ändern und die Betriebsbedingungen diesen Gegebenheiten folgen müssen.

Das aus diesem Reaktor erhaltene Polymer gelangt gemäß Fig. 1 über die Ventile 8 und 11 zu dem Polykondensationsreaktor 12, einem speziell gestalteten Endreaktor, wie er beispielsweise in der europäischen Patentanmeldung 1 251 957 beschrieben ist. Dieser Reaktor besteht aus einem horizontal angeordneten Behälter, der ein Verhältnis von Durchmesser zu Länge v0n 0,5:1 bis 5:1, vorzugsweise von 0,7:1,3 bis 3:1, aufweist. Er enthält eine im Wesentlichen horizontal angetriebene Welle mit daran befestigten Rührelementen, von denen das Polyphosphonat, Polyarylat, Polysulfonat oder Polyetherketon sowie deren Copolymerisate mittels der Zahnradpumpe 13 aus dem Endreaktor 12 abgezogen werden. Die Rohrleitungen sind mit einem Heizmantel versehen , dessen Temperatur mindestens 2°C und höchstens 20°C über dem Schmelzpunkt des durch die Leitungen geführten Produktes liegt. Der Endreaktor ist vorzugsweise mit statischen Elementen an den Reaktorwänden zur Erzeugung von dünnen Filmen und zum Abstreifen von mitgeführtem Produkt auf rotierenden Scheiben ausgestattet, wobei die Reaktorwelle nur eine Durchführung durch die beidseitigen Deckel aufweist.

Das Vorkondensat wird im Endreaktor bei einer Schmelzeverweilzeit von 5 Minuten bis 15 Stunden und vorzugsweise 15 bis 600 Minuten polykondensiert. Die Temperaturen hält man im Reaktor 1 und/oder im Zwischenreaktor 6 im Bereich zwischen 180 und 300°C, während sie im Endreaktor 12 auf den Bereich von 240 bis 400°C angehoben werden. Dabei saugt man mittels Dampfstrahler und/oder mechanischer Gebläse 17 aus jedem Reaktor die bei der Reaktion frei werdenden Dämpfe ab und senkt den Druck im Veresterungs-und/oder Umesterungsreaktor 1 sowie im Zwischenreaktor 6 kontinuierlich oder stufenweise von 2000 bis auf 100 mbar und im Endreaktor auf 100 bis 0,1 mbar ab. Es hat sich als besonders vorteilhaft erwiesen, im Reaktor 1 den Druck erst nach Erreichen der vollständigen Umesterung und einer ersten Vorkondensation mit Kettenwiederholungseinheiten bis zu 20 Struktureinheiten den Druck langsam linear oder in Stufen abzusenken. Durch diese Maßnahme lässt sich die Bildung von großen Gasblasen verhindern, die beim Zerplatzen dazu führen würden, dass vom Gas- oder Spaltproduktdampfstrom Polymerpartikel mitgerissen würden.

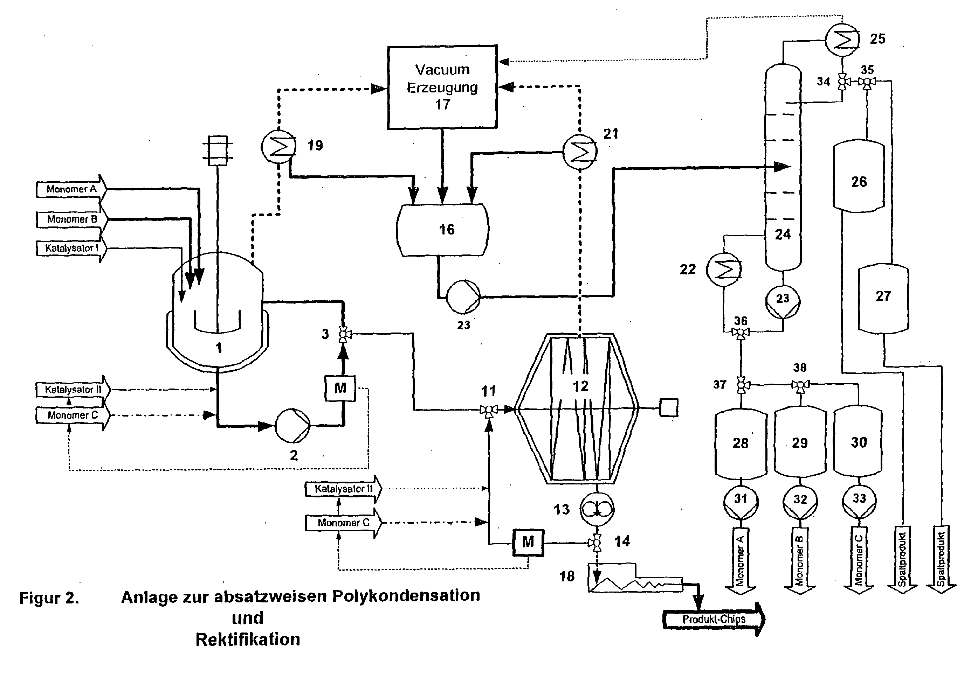

Das in Fig. 2 dargestellte Verfahrenskonzept ist besonders günstig, wenn Kosten für die apparative Ausrüstung gering gehalten werden sollen. Die Herstellung der oben genannten Polymere wird hier dadurch gelöst, dass man die Monomeren absatzweise über Füllschleusen aus unter inerter Atmosphäre stehende Monomervorlagen (nicht abgebildet) fördert. Von diesen Vorlagen aus werden dann fest vorgegebene Massen, die von der Menge des herzustellenden Polymers bestimmt sind, in den ersten Reaktor 1 gespeist. Liegen die Monomeren bei Umgebungstemperatur als Feststoff vor, werden sie in Pulverform eingegeben. Sind sie bei Umgebungstemperatur flüssig, werden die Monomere aus inertisierten Vorlagen mittels gasdichter Förderorgane in den Reaktor 1 eingebracht. Je nach Flüchtigkeit der Monomeren bei den angestrebten Reaktionsbedingungen wird eine das äquimolare Molverhältnis 1:1 überschreitende Monomerendosierung durchgeführt.

Abweichend von dem bei Fig. 1 geschilderten Verfahren findet hier keine Rektifikation der während der Reaktion mit den Spaltprodukten entweichenden Monomere statt. Die aus dem Reaktor entweichenden Brüden werden im Kondensator 19 nieder geschlagen und dem Kondensatsammelbehälter 16 zugeführt.

In der Veresterungs- und/oder Umesterungsstufe im Reaktor 1 findet bei höherer Temperatur und unter Katalysatorzusatz die erste Reaktion statt. Das hierbei gewonnene Veresterungs- oder Umesterungsprodukt wird gemäß Fig. 2 durch die Pumpe 2 und das Ventil 3 so lange im Kreis gefahren, bis eine festgelegte Viskosität erreicht ist, und das Produkt dann durch Umschalten des Ventils 3 dem Endreaktor 12 zugeführt. Die Zugabe von weiteren Monomeren, beispielsweise solchen mit tri-, tetra- und/oder höher funktionellen Gruppen erfolgt auf einmal oder nacheinander in die Kreislaufleitung zum Reaktor 1. Dabei werden erfindungsgemäß die sich stetig wandelnden Eigenschaften des durch die Pumpe 2 und das Ventil 3 umgepumpten Produkts beispielsweise durch kontinuierliche Messung der rheologischen Eigenschaften gemäß der DE 102 00 228, der Änderung des Druckwellenverhaltens gemäß DE 103 47 826 oder der Änderung der optischen Eigenschaften nach der Methode der bekannten FTIR-, NIR- oder UV-Spektroskopie überwacht. Besonders vorteilhaft erfolgt die Zugabe der modifizierenden Monomere in Abhängigkeit von einer Kontrolle der Eigenschaften des Kondensats.

Die während dieser Nach- und/oder Folgereaktion mit dem vorreagierten Produkt frei werdenden zusätzlichen Spaltprodukte werden ebenfalls kondensiert und im Behälter 16 gesammelt. Das aus dem Reaktor 1 erhaltene Polymere gelangt gemäß Fig. 2 über die Ventile 3 und 11 zu dem abschließenden Polykondensationsreaktor 12, einem speziell gestalteten Endreaktor, wie er beispielsweise in der EP 1 251 957 beschrieben ist. Diese Reaktoren weisen eine im Wesentlichen horizontal angetriebene Welle und daran befestigte Rührelemente auf, wobei das erhaltene Polykondensat mit einer Zahnradpumpe 13 aus dem Endreaktor abgezogen wird. Dabei wird das Ventil 14 so eingestellt, dass das Polykondensat über das Ventil 14 zum Reaktor 12 zurückgeführt wird, bis der gewünschte Grad der Polykondensation erreicht ist. Nach Erreichen des Endes der Polykondensation wird das Ventil 14 so umgeschaltet, dass das Endprodukt mittels Pumpe 13 zum Granulator 18 geführt wird und dort nach Abschreckung zu Polymerschnitzeln geschnitten wird.

Die aus dem Reaktor 12 abgesaugten Brüden werden im Kondensator 21 nieder geschlagen und im Behälter 16 gesammelt. Nach Abschluss der Produktion der jeweiligen Charge wird das gesamte Kondensat mittels Pumpe 23 zur Destillation und Rektifikation 24 gefahren, wo zuerst die leichter flüchtigen Produkte über Kopf ausgetrieben werden. Dabei wird der Betrieb der Kolonne 24 so geführt, dass die schwerer flüchtigen Monomere sich im Sumpf sammeln und in den Behältern 28, 29, 30 aufgefangen werden. Die leichter flüchtigen Spaltprodukte gelangen zum Kopf der Kolonne 24, werden im Kondensator 25 nieder geschlagen und als Teilstrom der Kolonne 24 im Rücklauf über das Ventil 35 dem Verfahren wieder zugeführt. Das Rücklaufverhältnis, bestimmt durch den Teil des Produktes nach 24 zu dem Teil, der den Sammelbehältern 26, 27 über Ventil 34, 35 zugeführt wird, ist abhängig von der Effektivität und der zu rektifizierenden Substanz.

Abweichend von dem bei Fig. 1 und 2 geschilderten Verfahren findet in dem in Fig. 3 dargestellten Verfahren eine gleichzeitige Rektifikation der während der Reaktion zusammen mit den Spaltprodukten entweichenden Monomere statt. Diese entweichen aus dem Reaktor 1 als Brüden und werden der Kolonne 4 zugeführt, wobei die höher als die Spaltprodukte siedenden Monomeren niedergeschlagen und als Sumpfprodukt in den Reaktor 1 zurückgeführt werden.

Die über Kopf gehenden Leichtsieder oder Spaltprodukte werden im Kondensator 5 kondensiert. Das Kondensat wird in den Kolonnenrücklauf und das auszuschleusende Produkt geteilt, das dem Kondensatsammelbehälter 16 zugeführt wird.

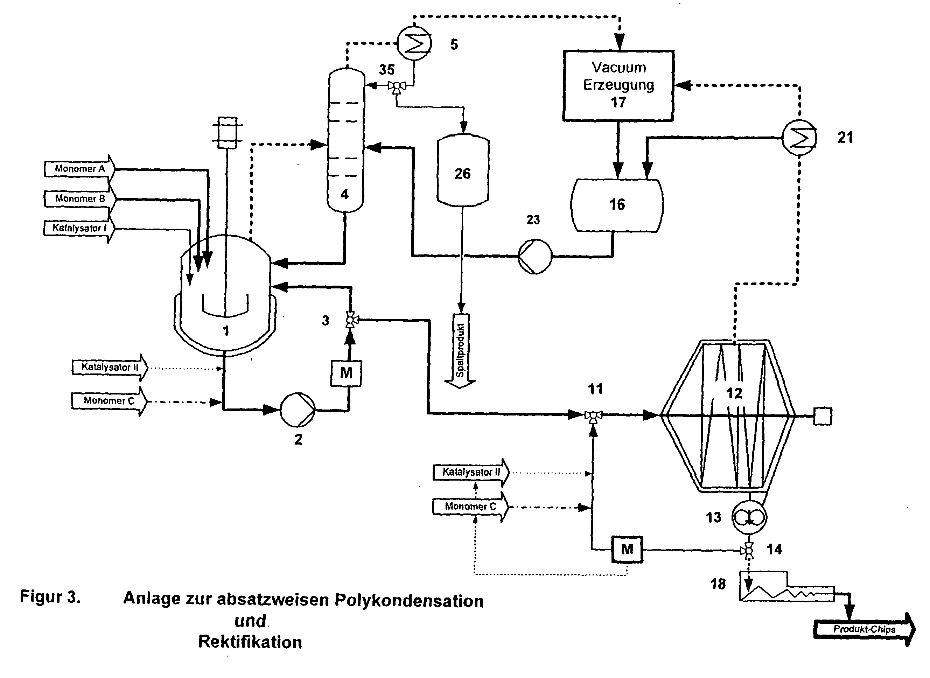

In der Veresterungs- und/oder Umesterungsstufe im Reaktor 1 findet bei höherer Temperatur und unter Zugabe von Katalysator I die erste Reaktion der Monomeren A und B statt. Das hierbei gewonnene Veresterungs- oder Umesterungsprodukt aus A und B wird gemäß Fig. 3 durch die Pumpe 2 und das Ventil 3 so lange im Kreis gefahren, bis eine festgelegte Viskosität erreicht ist. Danach erfolgt durch Umschalten des Ventils 3 die Zuführung zu dem Endreaktor 12 . Die Zugabe von weiteren Monomeren, beispielsweise solchen mit tri-, tetra-und/oder höher funktionellen Gruppen erfolgt auf einmal oder nacheinander in die Kreislaufleitung zum Reaktor 1. Dabei werden erfindungsgemäß die sich stetig wandelnden Eigenschaften des durch die Pumpe 2 und das Ventil 3 umgepumpten Produkts, beispielsweise durch kontinuierliche Messung der rheologischen Eigenschaften gemäß der DE 102 00 228, der Änderung des Druckwellenverhaltens gemäß DE 103 47 826 oder der Änderung der optischen Eigenschaften nach der Methode der bekannten FTIR-, NIR- oder UV-Spektroskopie überwacht. Besonders vorteilhaft ist die Zugabe des modifizierenden Monomeren C und/oder gegebenenfalls eines weiteren Katalysators II in Abhängigkeit von einer Kontrolle der Eigenschaften des Kondensats.

Die während dieser Nach- und/oder Folgereaktion mit dem vorreagierten Produkt freiwerdenden zusätzlichen Spaltprodukte werden der Rektifikation 4 zur Abtrennung von Monomeren zugeführt. Das aus dem Reaktor 1 erhaltene Polymere gelangt gemäß Fig. 3 über die Ventile 3 und 11 zu dem abschließenden Polykondensationsreaktor 12, einem speziell gestalteten Endreaktor, wie er beispielsweise in der EP 1 251 957 beschrieben ist. Dieser Reaktor weist eine im Wesentlichen horizontal angetriebene Welle und daran befestigte Rührelemente auf, wobei das erhaltene Polykondensat mit einer Zahnradpumpe 13 aus dem Endreaktor abgezogen wird. Dabei wird das Ventil 14 so eingestellt, dass das Polykondensat über das Ventil 14 zum Reaktor 12 zurückgeführt wird, bis der gewünschte Grad der Polykondensation erreicht ist. Nach Erreichen des Endes der Polykondensation wird das Ventil 14 so umgeschaltet, dass das Endprodukt mittels Pumpe 13 zum Granulator 18 geführt wird und dort nach Abschreckung zu Polymerschnitzeln geschnitten wird.

Die aus dem Reaktor 12 abgesaugten Brüden werden im Kondensator 21 niedergeschlagen und im Behälter 16 gesammelt. Nach Abschluss der Produktion der jeweiligen Charge wird das gesamte Kondensat aus 16 mittels Pumpe 23 während der nächsten Charge zur Destillation und Rektifikation 4 gefahren, wo die leichter flüchtigen Produkte über Kopf ausgetrieben werden. Dabei wird der Betrieb der Kolonne 4 so geführt, dass die schwerer flüchtigen Monomere sich im Sumpf sammeln und in den Reaktor 1 zurückgeleitet werden. Die leichter flüchtigen Spaltprodukte gelangen zum Kopf der Kolonne 4, werden im Kondensator 5 nieder geschlagen und als Teilstrom der Kolonne 4 als Rücklauf über das Ventil 35 zugeführt. Das Rücklaufverhältnis, ist abhängig von der Art und der Konstruktion der Kolonneneinbauten und der zu rektifizierenden Substanz und muss über den zeitlichen Verlauf der Reaktion angepasst werden, um eine optimale Trennwirkung zu erreichen.

Für die erfindungsgemäße Herstellung von Polykondensaten kommen beispielsweise monomere Phosphatkomponenten, Dihydroxydiphenyl und andere Bisphenole und Diphenylester der Methylphosphonsäure in Frage. Für die Diphenol- oder Dialkoholkomponente eignen sich besonders die im Handel unter dem Namen "Bisphenol A bis F" bekannten Diphenole, jedoch können auch andere Diphenole eingesetzt werden.

Als Umesterungskatalysatoren sind metallorganische Verbindungen wie Zinkazetat oder Natriumphenolat geeignet, die zum Beispiel in der DE 31 11 653 beschrieben sind sowie andere metallorganische Verbindungen, die bei D. Braun, H. Cherdron, H. Ritter in "Praktikum der makromolekularen Stoffe", Wiley-VCH Verlag, Weinheim, 1999 vorgeschlagen worden sind.

Wesentlichen Einfluss auf die Produkteigenschaften haben bei dem erfindungsgemäßen Verfahren die in den verschiedenen Reaktoren angewendeten Temperaturen und Drucke. Hierbei wird die Qualität des erfindungsgemäß erhaltenen Polykondensats von der Form des Reaktors in entscheidender Weise beeinflusst, da von ihr die Verweilzeit, der Stoffaustausch, die Oberflächenerneuerungseigenschaft und das Selbstreinigungsverhalten abhängen, die in besonderer Weise die Eigenschaften des Polykondensats bestimmen. Für den ersten Schritt, das Aufschmelzen, das Erreichen des stöchiometrischen Verhältnisses der Monomeren, die Katalysatorzugabe und die beginnende Reaktion sind gerührte Kessel oder Kaskaden gut geeignet. Für die danach einsetzende Polykondensation, bei der mit zunehmendem Kettenwachstum immer zäher werdende Produkte entstehen, sind diese nur bedingt und nur nach Einbau von speziellen Mischelementen und nach Anpassung des Rührorgans an die sich wandelnden Polymereigenschaften geeignet. Für die sich bei zunehmender Kondensation und ansteigender Kettenlänge kontinuierlich ändernden Eigenschaften des Produkts sind als Zwischenreaktor oder auch als Endreaktor die in der EP 1 251 957 beschriebenen Ringscheibenreaktortypen und deren für den absatzweisen Betrieb modifizierte Ausführungen vorzuziehen. Zur Förderung des Ausgasens von Spaltprodukten, die im Laufe der Veresterungs-, Umesterungs- und Polykondensation bei Fortschreiten der Kettenverlängerung freigesetzt werden, vermindert man stetig den Druck in den einzelnen Reaktoren. Zum Erzeugen eines Vakuums in den Reaktoren kann man Dampfstrahler verwenden, wie sie in dem US-Patent 5 576 414 beschrieben sind. Dabei empfiehlt es sich dafür zu sorgen, dass der Druck in einem unmittelbar nachfolgenden Reaktor höchstens halb so hoch ist wie in dem unmittelbar vorausgehenden Reaktor.

Für die Herstellung von Polymeren, denen durch Hinzufügen eines weiteren Monomers eine vom Grundgerüst abweichende Struktur zukommt, kann man verschiedene Verfahren nutzen. Eine erfindungsgemäß vorgesehene Verfahrensvariante sieht vor, dass während der im Zwischenreaktor 6 ablaufenden Kondensation ein weiteres Monomer zugesetzt wird und dann in diesem Reaktor bei veränderten oder gleichen Bedingungen, wie sie im ersten Reaktor herrschen, die Polymerisation und/oder die Pfropfreaktion weitergeführt wird, wobei sternförmige, kammartige, strauchartige, baumartige und dendrimerförmige Verzweigungsstrukturen in regelmäßiger und statistischer Verteilung gebildet werden können. Bei einer derartigen Pfropfreaktion und/oder Kettenverzweigung werden außer dem zusätzlichen Monomer auch ein weiterer Katalysator sowie Stabilisatoren, Fließverbesserer und feststoffhaltige Additive zugesetzt, die zu einer Kontamination des Reaktors führen und bei Folgereaktion im gleichen Reaktor stören können, wenn eine vollständige Entleerung und Reinigung des Reaktors nicht möglich ist. Eine solche Kontamination der Monomeren im Grundpolymeransatz mit den zugesetzten anderen Stoffen ist für den Reaktor 1 nicht vorteilhaft, da sie zu unerwünschten Nebenreaktion und/oder anderen Produkteigenschaften als den gewünschten führen kann.

Eine dreistufige Verfahrensführung hat den Vorteil, dass man die Temperatur in den nachfolgenden Reaktoren stufenweise anheben und damit auch den zum Absaugen der Spaltprodukte notwendigen Unterdruck regulieren und wirtschaftlichen Gesichtspunkten anpassen kann. Dadurch können zu Beginn der Polykondensation bei kurzen Ketten der Moleküle und bei einem noch niedrigen Polymerschmelzpunkt niedrige Anfangstemperaturen eingestellt werden. Auch entstehen zu Beginn der Polykondensation große Mengen an Spaltprodukten und es ist apparativ und wirtschaftlich vorteilhaft, diese mit nur geringem Unterdruck abzusaugen, wobei man auch mit kostengünstigeren Pumpen oder Saugstrahlern arbeiten kann. In der Praxis haben sich für dieses Absaugen Dampf- oder Flüssigkeitsstrahler als besonders betriebssicher erwiesen, während der Betrieb mit mechanischen Gebläsen hohe Investitionskosten verursacht, aber höchste Energieeffizienz bietet. Die Zugabe eines Verzweigers in dieser Phase führt zu langkettigen Verzweigungen, die ihrerseits wieder Verzweigungen aufweisen und so dendrimerartige oder baumartige Struktur aufweisen können.

Mit zunehmender Reaktionszeit und Reaktionstemperatur wachsen die Polymerketten, so dass im Zwischenreaktor 6 Kettenlängen von 15 bis 35 Struktureinheiten und im Endreaktor 12 Kettenlängen von 30 bis 100 Struktureinheiten erreicht werden. Dabei steigt die Zähigkeit der Schmelze an und die Ausgestaltung des Polykondensationsreaktors mit speziellen rheologischen Eigenschaften wird notwendig. Dabei kann der Innenraum eines solchen Reaktors von der zylindrischen Form abweichen und zum Beispiel auch eine konische Form aufweisen. Die Zugabe eines Verzweigers in dieser Phase führt zu Verzweigungen die kurze und/oder mittlere Länge aufweisen und eine mehr oder weniger strauchartige und/oder kammartige Struktur zeigen.

Die Erfindung wird durch die nachfolgenden Beispiele näher erläutert:

### Beispiel 1

Die als kristallisiertes, pulverisiertes oder pelletisiertes Rohmaterial angelieferten Monomeren Bisphenol A, weiterhin als BPA abgekürzt, und Diphenylmethylphosphonat, weiterhin als DPMP abgekürzt, werden in Vorlagebehälter abgefüllt und mit Hilfe von Dosierschnecken kontinuierlich in Aufschmelzer eingebracht, die mit Wärmetauschern und Rührwerken ausgestattet sind. Aus den beiden Vorlagebehältern werden die durch die Stöchiometrie der Reaktion festgelegten aliquoten Massenströme aus aufgeschmolzenem Monomeren in den Umesterungskessel 1 gefördert, der mit einer Mantelbeheizung und einem Rührorgan ausgestattet ist. Aus einer Vorlage erfolgt die Zugabe der aus der Polymerliteratur bekannten Mischkatalysatoren bestehend aus einem Alkalisalz des Bisphenols und Zinkacetat wie im Patent DE 31 11 653 beschrieben. Die Reaktion der beiden Monomeren wird bei einer Temperatur von 240°C und einem Druck von 800 mbar eingeleitet. Das frei werdende Phenol wird zu Bestimmung des Reaktionsfortschrittes aufgefangen und volumetrisch bestimmt. Das umgeesterte Produkt aus dem Reaktor 1 hat noch eine niedrige mittlere Polymerkettenlänge, die im Mittelwert bei 10 Wiederholungseinheiten bzw. Struktureinheiten liegt und weist durch das Verweilzeitverhalten im Rührkessel noch geringe Mengen an unreagiertem Monomeren auf. Die Molekulargewichtsverteilung, der Restgehalt an Monomeren und das mittlere Molekulargewicht des Umesterungsproduktes werden mittels Chromatographie überwacht. Dieses Produkt gelangt in den Zwischenreaktor 6, der bei einem Druck von 200 mbar betrieben wird. Hier erfolgt über 2,5 Stunden eine kontinuierliche Aufheizung von 240 auf 280°C. Die entstehenden Spaltprodukte werden von einem mehrstufigen Flüssigkeits-Dampfstrahlersystem 17 abgesaugt und nach einer Rektifikation bei einer Temperatur, die über dem Siedepunkt des Spaltproduktes und unterhalb der Siedetemperatur des in den Brüden enthaltenen Monomers liegt, im Kondensator 5 nieder geschlagen. Aus der Zwischenstufe 6 gelangt das Produkt in den Endreaktor 12 mit Hilfe einer Pumpe 7, wo bei einem Druck von 1,5 mbar, einer Temperatur von 330°C und einer Verweilzeit von 200 Minuten die Polykondensation zu Ende geführt wird. Der während der Verweilzeit steigenden Kettenlänge bzw. Viskosität wird dadurch Rechnung getragen, dass die zur Erzeugung der Oberfläche notwendigen rotierenden Scheiben, Ringscheiben und Ringscheibensegmente von statistischen Elementen abgereinigt werden. Für diesen Zweck ist der HVSR, Kunststoffe 1/1992 S. 19 - 20, besonders geeignet. Das den Endreaktor 12 verlassende Produkt weist nur geringe Gelbfärbung durch Abbauprodukte äußerste geringe Anteile an Gelen und schwarzen Partikeln sowie eine enge Molekulargewichtsverteilung auf.

### Beispiel 2

In einer Versuchsanlage bestehend aus den Reaktoren in Fig. 1 und einer Verfahrensweise wie in Beispiel 1 beschrieben, wird eine Veresterungsstufe 1 aus drei Vorlagen mit Terephthalsäure, Isophthalsäure und Bisphenol A im molaren Verhältnis von 1: 0:75 : 1.75 gespeist. Aus einer Vorlage erfolgt die Zugabe des Katalysators in Form eines Alkalisalzes des Bisphenols. Die Reaktion der Monomeren wird bei einer Temperatur von 280°C und einem Druck von 800 mbar eingeleitet. Das frei werdende Wasser wird zur Bestimmung des Reaktionsfortschrittes aufgefangen und volumetrisch bestimmt. Das veresterte Produkt aus dem Reaktor 1 gelangt analog Beispiel 1 in den Zwischenreaktor 6, der bei einem Druck von 250 mbar betrieben wird. Hier erfolgt die Zugabe von 10⁻³ mol pro mol Bisphenol Diphenylmethylphosphonat und das Produkt erfährt bei einer Verweilzeit von 145 Minuten eine kontinuierliche Aufheizung von 280 auf 300°C. Dabei kondensiert das Produkt weiter und das entstehende Spaltprodukt wird von dem mehrstufigen Flüssigkeits-Dampfstrahlersystem abgesaugt.

Aus dem Zwischenreaktor 6 gelangt das Produkt nach Beendigung der Reaktionszeit mittels Pumpe 7 und Ventil 8 in den Endreaktor 12, der auf 25 mbar Druck gehalten wird und in dem die Temperatur kontinuierlich von der Austrittstemperatur des Zwischenreaktors 6 auf eine Temperatur von 320°C bei 60 Minuten Verweilzeit steigt. Aus dem Reaktor 12, wo bei einem Druck von 0,5 mbar, einer Temperatur von 330°C und einer Verweilzeit von 65 Minuten die Polykondensation zu Ende geführt wird, gelangt das Produkt mit Hilfe einer Zahnradpumpe 13 in den Granulator 18. Das den Granulator 18 verlassende Produkt weist nur geringe Gelbfärbung durch Abbauprodukte äußerste geringe Anteile an Gelen und schwarzen Partikeln sowie eine enge Molekulargewichtsverteilung auf.

### Beispiel 3

In einer Versuchsanlage, wie in Beispiel 1 beschrieben, wird eine Veresterungsstufe 1 aus drei Vorlagen mit Terephthalsäure, isophthalsäure und Bisphenol A im molaren Verhältnis von 1: 0:75 : 1.75 gespeist. Aus einer Vorlage erfolgt die Zugabe des Katalysators in Form eines Alkalisalzes des Bisphenols A. Es erfolgt die Zugabe von 10⁻³ mol pro mol Bisphenol an 1,3,5 Trihydroxyphenol in den Zwischenreaktor 6 und über 2,5 Stunden eine kontinuierliche Aufheizung von 240 auf 280°C.

### Beispiel 4

In einer Versuchsanlage, wie in Beispiel 1 beschrieben, wird eine Veresterungsstufe 5 aus vier Vorlagen mit Terephthalsäure, Isophthalsäure, p-Phenylendiamin und o-Phenylendiamin im molaren Verhältnis von 1 : 1 : 1.03 : 1 gespeist. Aus einer Vorlage erfolgt die Zugabe des Katalysators in Form einer titanorganischen Verbindung. Die Reaktion der Monomeren wird bei einer Temperatur von 180°C und einem Druck von 1000 mbar eingeleitet.

### Bezugszeichenliste:

| | | |
|---|---|---|
| 1 | Veresterung-/Umesterungsreaktor | - 1. Stufe |
| 2 | Kreislauf/Übergabepumpe | - 1. Stufe |
| 3 | Umschaltventil Kreislauf/Übergabe | - 1. Stufe |
| 4 | Rektifizierkolonne | - 1. Stufe |
| 5 | Brüdenkondensator | - 1. Stufe |
| 6 | Zwischenreaktor | - 2. Stufe |
| 7 | Kreislauf/Übergabepumpe | - 2. Stufe |
| 8 | Umschaltventil Kreislauf/Übergabe | - 2. Stufe |
| 9 | Rektifizierkolonne Zwischenstufe | - 2. Stufe |
| 10 | Brüdenkondensator Zwischenstufe | - 2. Stufe |
| 11 | Umschaltventil Kreislauf/Übergabe | - Endstufe |
| 12 | Polykondensationsreaktor | - Endstufe |
| 13 | Zahnradpumpe Kreislauf/Austrag | - Endstufe |
| 14 | Umschaltventil Kreislauf/Austrag | - Endstufe |
| 15 | Brüdenkondensator Polykondensationsreaktor | - Endstufe |
| 16 | Sammelbehälter | |
| 17 | Vakuum Erzeugungsstation | |
| 18 | Granulator | |
| 19 | Brüdenkondensator Veresterungs-/Umesterungsreaktor | |
| 20 | ... | |
| 21 | Brüdenkondensator Polykondensationsreaktor | |
| 22 | Kreislauf/Übergabepumpe Rektifikation | |
| 23 | Wärmetauscher Rektifikation | |
| 24 | Reaktifikationskolonne | |
| 25 | Brüdenkondensator Rektifikation | |
| 26 | Sammelbehälter Spaltprodukt | |
| 27 | Sammelbehälter Spaltprodukt | |
| 28 | Sammelbehälter Monomer A - C | |
| 29 | Sammelbehälter Monomer A - C | |
| 30 | Sammelbehälter Monomer A - C | |
| 31 | Förderpumpe Monomer A - C | |
| 32 | Förderpumpe Monomer A - C | |
| 33 | Förderpumpe Monomer A - C | |
| 34 | Umschaltventil Kreislauf/Sammelbehälter | |
| 35 | Umschaltventil Kreislauf/Sammelbehälter | |
| 36 | Umschaltventile Kreislauf/Sammelbehälter | |
| 37 | Umschaltventil Kreislauf/Sammelbehälter | |
| 38 | Umschaltventil Kreislauf/Sammelbehälter | |

| | | |
|---|---|---|
| M | kontinuierliche Messung, Überwachung und Steuerung | |

## Patentansprüche

1. Verfahren zur absatzweisen Herstellung von hochmolekularen Polyphosphonaten, Polysulfonen, Polyarylaten, (Polyamiden), Polyarylenethern oder Polyetherketonen durch Schmelzekondensation einer Hydroxyl-, Carboxyl, Anhydrid-, Phosphorsäure-, Phosphono-, Phosphonat-, Phosphino-, Phosphinat-, Carbonyl-, Sulfonyl-, Sulfonat-, Siloxan- oder Aminogruppen tragende monomeren Verbindung mit sich selbst oder mit mindestens einem Diphenol, Dialkohol, Diamin oder einer Dicarbonatkomponente, **dadurch gekennzeichnet, dass** man
a) in einem absatzweise betriebenen ersten Reaktor (1) in Gegenwart eines Veresterungs- oder Umesterungskatalysators eine Veresterung oder Umesterung sowie eine Vorkondensation durchführt;
b) dann gegebenenfalls in einem absatzweise betriebenen Zwischenreaktor (6), ggf. unter Zugabe eines oder mehrerer weiterer Monomerer, eines weiteren Katalysators und Additiven eine Polykondensation bis zum Erreichen eines vorbestimmten Polykondensations- oder Viskositätsgrades vornimmt und
c) schließlich in einem absatzweise betriebenen Endreaktor (12) die Kondensation bis zum Erreichen des gewünschten Polykondensations- oder Viskositätsgrades fortsetzt und
d) gegebenenfalls Verzweigermoleküle, die mehr als zwei funktionelle Gruppen aufweisen,
- vor oder während der Veresterung oder Umesterung,
- vor oder während der gegebenenfalls im Zwischenreaktor durchgeführten Polykondensation oder
- vor oder während der im Endreaktor durchgeführten Polykondensation zusetzt,
wobei man eine Verweilzeit in den Reaktoren zwischen 5 Minuten und 15 Stunden einhält, die Temperatur im ersten Reaktor (1) und im Zwischenreaktor (6) auf 180 bis 300°C und im Endreaktor (12) auf 240 bis 400°C einstellt und unter Absaugen der bei der Kondensation entstehenden Dämpfe den Druck im ersten Reaktor (1) und im Zwischenreaktor (6) kontinuierlich oder stufenweise von 2.000 bis auf 100 mbar und im Endreaktor (12) auf 100 bis 0,01 mbar absenkt, wobei im Verfahren eine Zugabe von Monomeren in Abhängigkeit einer kontinuierlichen Messung der sich stetig wandelnden Eigenschaften des Kondensats erfolgt.

2. Verfahren nach Anspruch 1, **dadurch gekennzeichnet, dass** man in das im ersten Reaktor (1) gewonnene Vorkondensat unter gleichzeitiger Zugabe eines oder mehrerer weiterer Monomeren, eines weiteren Katalysators und gegebenenfalls etwaiger Additive unter Verzicht auf den Zwischenreaktor (6) unmittelbar dem Endreaktor (12) zuführt und dort eine Polykondensation bis zum Erreichen eines vorbestimmten Polykondensations- oder Viskositätsgrades vornimmt, wobei die während der Kondensationsreaktionen mit den gebildeten Spaltprodukten entweichenden Monomeren als Kondensate gesammelt und dann destillativ aufgearbeitet werden.

3. Verfahren nach Anspruch 1, **dadurch gekennzeichnet, dass** man die bei der Herstellung des Vorkondensats im ersten Reaktor (1) zusammen mit den Spaltprodukten als Brüden entweichenden Monomeren dem ersten Reaktor (1) wieder zuführt, während man die Spaltprodukte als Kondensate ausschleust und das im ersten Reaktor gebildete Vorkondensat nach Zugabe eines oder mehrerer weiterer Monomeren, eines weiteren Katalysators und gegebenenfalls etwaiger Additive unter Verzicht auf den Zwischenreaktor (6) unmittelbar dem Endreaktor (12) zuführt und dort eine Polykondensation bis zum Erreichen eines vorbestimmten Polykondensations- oder Viskositätsgrades vornimmt.

4. Verfahren nach den Ansprüchen 1 bis 3, **dadurch gekennzeichnet, dass** man aus den Spaltproduktbrüden durch fraktionierte Kondensation und/oder Destillation Monomere zurückgewinnt und dem Verfahren wieder zuführt.

5. Verfahren nach den Ansprüchen 1 bis 4, **dadurch gekennzeichnet, dass** der Druck in den Reaktoren linear oder stufenweise abgesenkt wird und in einem unmittelbar nachfolgenden Reaktor höchstens nur halb so hoch ist wie in dem unmittelbar vorausgehenden Reaktor.

6. Verfahren nach den Ansprüchen 1 bis 5, **dadurch gekennzeichnet, dass** das im Reaktor (1) hergestellte, veresterte und/oder umgeesterte Vorkondensat durchschnittliche Kettenlängen von bis zu 20 Struktureinheiten aufweist.

7. Verfahren nach den Ansprüchen 1 bis 6, **dadurch gekennzeichnet, dass** das aus dem Zwischenreaktor (6) gewonnene Produkt durchschnittliche Kettenlängen von 15 bis 35 Struktureinheiten aufweist.

8. Verfahren nach den Ansprüchen 1 bis 7, **dadurch gekennzeichnet, dass** das aus dem Endreaktor (12) gewonnene Produkt durchschnittliche Kettenlängen von 30 bis 100 Struktureinheiten aufweist.

9. Verfahren nach den Ansprüchen 1 bis 8, **dadurch gekennzeichnet, dass** man den Verlauf der Kondensationsreaktion durch kontinuierliche Messung der rheologischen Eigenschaften, der Änderung des Druckwellenverhaltens und/oder der Veränderung der optischen Eigenschaften überwacht.

10. Verfahren nach den Ansprüchen 1 bis 9, **dadurch gekennzeichnet, dass** man durch Zugabe weiterer Monomerer, Stabilisatoren, Fließverbesserer und/oder Additive die rheologischen Eigenschaften des Kondensationsproduktes steuert.

11. Verfahren nach den Ansprüchen 1 bis 10, **dadurch gekennzeichnet, dass** man das Produkt in jedem Reaktor während der jeweiligen Verweilzeit im Kreislauf führt.

12. Vorrichtung zur Durchführung des Verfahrens nach den Ansprüchen 1 bis 11, **dadurch gekennzeichnet, dass** zumindest der Endreaktor (12) aus einem horizontal angeordneten Behälter besteht und dieser ein Verhältnis von Durchmesser zu Länge von 0,5:1 bis 5:1, vorzugsweise von 0,7:1,3 bis 3:1 aufweist, und die Vorrichtung ein oder mehrere Einrichtungen für die Zugabe von Monomeren aufweist, welche in Abhängigkeit von Instrumenten zur kontinuierlichen Messung der sich stetig wandelnden Eigenschaften des Kondensats steuerbar sind.

13. Vorrichtung nach Anspruch 12, **dadurch gekennzeichnet, dass** der Endreaktor (12) mit statischen Elementen an den Reaktorwänden zur Erzeugung von dünnen Filmen und zum Abstreifen von mitgeführtem Produkt auf rotierenden Scheiben ausgestattet ist.

14. Vorrichtung nach den Ansprüchen 12 bis 13, **dadurch gekennzeichnet, dass** die Reaktorwelle des horizontalen Endreaktors (12) nur eine Durchführung durch die beidseitigen Deckel aufweist.

15. Vorrichtung nach Anspruch 12, **dadurch gekennzeichnet, dass** es sich bei den Einrichtungen zur kontinuierlichen Messung der Eigenschaften des Kondensats um Instrumente zur Messung der rheologischer Eigenschaften, der Änderung des Druckwellenverhaltens und/oder der Veränderung der optischen Eigenschaften handelt.

## Claims

1. Process for the batchwise production of high-molecular polyphosphonates, polysulphones, polyacrylates (polyamides), polyarylene ethers or polyether ketones by melt condensation of a monomer compound carrying a hydroxyl group, carboxyl group, anhydride group, phosphoric acid group, phosphono group, phosphonate group, phosphino group, phosphinate group, carbonyl group, sulphonyl group, sulphonate group, siloxane group or amino group with itself or with at least one diphenol, dialcohol, diamine or a dicarbonate component, **characterised in that**
a) in a first reactor (1) operated batchwise an esterification or transesterification and a precondensation are carried out in the presence of an esterification or transesterification catalyst;
b) subsequently, optionally in an intermediate reactor (6) operated batchwise, a polycondensation is carried out optionally with an addition of one or more further monomers, a further catalyst and additives until a predetermined degree of polycondensation or degree of viscosity is achieved and
c) finally, the condensation is continued in a final reactor (12) operated batchwise until the desired degree of polycondensation or degree of viscosity is achieved
d) optionally branching molecules exhibiting more than two functional groups
- are added before or during esterification or transesterification,
- before or during the polycondesation optionally carried out in the intermediate reactor or
- before or during the polycondensation carried out in the final reactor,
a residence time being maintained in the reactors of between 5 minutes and 15 hours, the temperature in the first reactor (1) and in the intermediate reactor (6) being adjusted to 180 to 300 °C and in the final reactor (12) to 240 to 400 °C and while sucking off the vapours formed during condensation, the pressure in the first reactor (1) and in the intermediate reactor (6) being continually or stepwise reduced from 2,000 to 100 mbar and in the final reactor (12) to 100 to 0.01 bar, an addition of monomers taking place in the process as a function of a continuous measurement of the continually changing properties of the condensate.

2. Process according to claim 1 **characterised in that** the precondensate obtained in the first reactor (1) is passed, with the simultaneous addition of one or more further monomers, a further catalyst and optionally possible additives, with omission of the intermediate reactor (6), directly to the final reactor (12) and there a polycondensation is carried out until a predetermined degree of polycondensation or degree of viscosity is achieved, the monomers escaping during the condensation reactions with the cleavage products formed being collected as condensates and then worked up by distillation.

3. Process according to claim 1 **characterised in that** the monomers escaping as exhaust steam during the production of the precondensate in the first reactor (1) together with the cleavage products are recycled to the first reactor (1) while the cleavage products are discharged as condensates and the precondensate formed in the first reactor is passed, after the addition of one or more further monomers, a further catalyst and optionally possible additives, with omission of the intermediate reactor (6), directly to the final reactor (12) and there a polycondensation is carrier out until a predetermined degree of polycondensation or degree of viscosity is achieved.

4. Process according to claims 1 to 3 **characterised in that** monomers are recovered from the cleavage product exhaust steam by fractional condensation and/or distillation.

5. Process according to claims 1 to 4 **characterised in that** the pressure in the reactors is reduced in a linear or stepwise manner and in a directly subsequent reactor it is maximum only half as high as in the immediately preceding reactor.

6. Process according to claims 1 to 5 **characterised in that** the esterified and/or transesterified precondensate produced in the reactor (1) has average chain lengths of up to 20 structural units.

7. Process according to claims 1 to 6 **characterised in that** the product obtained from the intermediate reactor (6) has average chain lengths of 15 to 35 structural units.

8. Process according to claims 1 to 7 **characterised in that** the product obtained from the final reactor (12) has average chain lengths of 30 to 100 structural units.

9. Process according to claims 1 to 8 **characterised in that** the course of the condensation reaction is monitored by continuous measurement of the rheological properties, the change in the pressure wave behaviour and/or the change in the optical properties.

10. Process according to claims 1 to 9 **characterised in that** the rheological properties of the condensation product are controlled by adding further monomers, stabilisers, flow improvers and/or additives.

11. Process according to claims 1 to 10 **characterised in that** the product is recycled in each reactor during the residence period concerned.

12. Device for carrying out the process according to claims 1 to 11 **characterised in that** at least the final reactor (12) consists of a container arranged horizontally and this has a ratio of diameter to length of 0.5:1 to 5:1, preferably of 0.7:1.3 to 3:1 and the device exhibits one or more items of equipment for the addition of monomers which are controllable as a function of instruments for continuous measurement of the continually changing properties of the condensate.

13. Device according to claim 12 **characterised in that** the final reactor (12) is equipped with static elements on the reactor walls for producing thin films and for scraping off entrained product on rotating discs.

14. Device according to claims 12 and 13 **characterised in that** the reactor shaft of the horizontal final reactor (12) exhibits only one bushing through the covers on both sides.

15. Device according to claims 12 **characterised in that** the items of equipment for continually measuring the properties of the condensate are instruments for measuring the rheological properties, the change in the pressure wave behaviour and/or the change in the optical properties.

## Revendications

1. Procédé de préparation discontinue de polyphosphonates, polysulfones, polyarylates, (polyamides), polyarylèneéthers ou polyéthercétones à masse moléculaire élevée par condensation chimique d'un composé monomère pourvu de groupes hydroxyle, carboxyle, anhydride, acide phosphorique, phosphono, phosphonate, phosphino, phosphinate, carbonyle, sulfonyle, sulfonate, siloxane ou amino, s'agissant d'une condensation chimique réalisée à l'état de fusion, soit avec le même type de molécules soit avec au moins un composant de type diphénol, dialcool, diamine ou dicarbonate, **caractérisé en ce qu'**on
a) effectue, de manière discontinue dans un premier réacteur (1), une estérification ou transestérification en présence d'un catalyseur d'estérification ou de transestérification ainsi qu'une précondensation chimique;
b) procède, le cas échéant, dans un réacteur intermédiaire (6) et de manière discontinue, à une polycondensation, le cas échéant en ajoutant un ou plusieurs types de monomères supplémentaires, un catalyseur supplémentaire ainsi que des additifs, jusqu'à atteindre un certain degré de polycondensation ou de viscosité, et
c) poursuit la condensation chimique, dans un réacteur final (12) et de manière discontinue, jusqu'à atteindre le degré de polycondensation ou de viscosité, et
d) ajoute, le cas échéant, des molécules de ramification pourvues de plus de deux groupes fonctionnels, ledit ajout étant réalisé
- avant ou pendant l'estérification ou la transestérification,
- avant ou pendant la polycondensation réalisée, le cas échéant, dans le réacteur intermédiaire ou
- avant ou pendant la polycondensation réalisée dans le réacteur final,
la durée de séjour dans les réacteurs se situant entre 5 minutes et 15 heures, en ajustant la température dans le premier réacteur (1) et dans le réacteur intermédiaire (6) à 180 à 300 °C et dans le réacteur final (12) à 240 à 400 °C et en diminuant, par aspiration des vapeurs produites lors de la condensation chimique, la pression de manière continue ou discontinue, faisant ainsi en sorte qu'elle descende de 2.000 à 100 mbar dans le premier réacteur (1) et dans le réacteur intermédiaire (6) et de 100 à 0,01 mbar dans le réacteur final (12), les monomères étant ajoutés au cours du procédé en fonction des propriétés du produit de la condensation chimique qui évoluent en permanence, lesdites propriétés étant mesurées de manière continue.

2. Procédé selon la revendication 1, **caractérisé en ce que** le produit obtenu par précondensation chimique dans le premier réacteur (1) est directement introduit dans le réacteur final (12) sans passer par le réacteur intermédiaire (6) et en ajoutant en même temps un ou plusieurs types de monomères, un catalyseur supplémentaire et, le cas échéant, des additifs, pour y procéder à une polycondensation jusqu'à atteindre un degré de polycondensation ou de viscosité prédéfini, les monomères dégagés avec les produits de dégradation générés au cours des réactions de condensation chimique étant récupérés sous forme de condensats pour ensuite être traités par distillation.

3. Procédé selon la revendication 1, **caractérisé en ce que** les monomères qui sont dégagés sous forme de buées, ensemble avec les produits de dégradation, au cours de la préparation du produit de précondensation chimique dans le premier réacteur (1), sont recyclés dans le premier réacteur (1) alors les produits de dégradation sont sortis du circuit sous forme de condensats, et que le produit obtenu par précondensation chimique dans le premier réacteur (1) est directement introduit dans le réacteur final (12) sans passer par le réacteur intermédiaire (6), après avoir ajouté un ou plusieurs types de monomères, un catalyseur supplémentaire et, le cas échéant, des additifs, pour y procéder à une polycondensation jusqu'à atteindre un degré de polycondensation ou de viscosité prédéfini.

4. Procédé selon les revendications 1 à 3, **caractérisé en ce que** les produits de dégradation dégagés sous forme de buées sont soumis à une condensation fractionnée et/ou une distillation pour récupérer des monomères et les recycler dans le circuit du procédé.

5. Procédé selon les revendications 1 à 4, **caractérisé en ce que** la pression dans les réacteurs est diminuée de manière linéaire ou par paliers, la pression dans un réacteur donné correspondant au maximum à la moitié de la pression dans le réacteur situé directement en amont.

6. Procédé selon les revendications 1 à 5, **caractérisé en ce que** la longueur de chaîne du produit de la précondensation chimique, qui a été préparé dans le réacteur (1) et soumis à une estérification ou une transestérification, est telle qu'il comprend en moyenne jusqu'à 20 unités structurelles.

7. Procédé selon les revendications 1 à 6, **caractérisé en ce que** la longueur de chaîne du produit obtenu dans le réacteur intermédiaire (6) est telle qu'il comprend en moyenne entre 15 et 35 unités structurelles.

8. Procédé selon les revendications 1 à 7, **caractérisé en ce que** la longueur de chaîne du produit obtenu dans le réacteur final (12) est telle qu'il comprend en moyenne entre 30 et 100 unités structurelles.

9. Procédé selon les revendications 1 à 8, **caractérisé en ce que** le progrès de la réaction de condensation chimique est suivi en mesurant de manière continue les propriétés rhéologiques, l'évolution du comportement face aux ondes de pression et/ou l'évolution des propriétés optiques.

10. Procédé selon les revendications 1 à 9, **caractérisé en ce que** les propriétés rhéologiques du produit de la condensation chimique sont contrôlées en ajoutant des monomères, des agents stabilisants, des agents améliorant la fluidité et/ou des additifs.

11. Procédé selon les revendications 1 à 10, **caractérisé en ce que** dans chacun des réacteurs, on fait circuler le produit durant son séjour dans le réacteur concerné.

12. Dispositif destiné à la mise en oeuvre du procédé selon les revendications 1 à 11, **caractérisé en ce qu'**au moins le réacteur final (12) est constitué par un récipient disposé horizontalement et que le rapport entre le diamètre et la longueur de celui-ci est compris entre 0,5 : 1 et 5 : 1, de préférence entre 0,7 : 1,3 et 3 : 1, et que le dispositif est pourvu d'un ou de plusieurs dispositifs permettant d'ajouter des monomères, ces derniers dispositifs étant réglables en fonction d'instruments mesurant de manière continue les propriétés du produit de la condensation chimique qui évoluent en permanence.

13. Dispositif selon la revendication 12, **caractérisé en ce que** le réacteur final (12) est pourvu d'éléments statiques disposés sur les parois du réacteur et destinés à générer des films minces et à racler des disques en rotation pour les débarrasser de produit qui y adhère.

14. Dispositif selon les revendications 12 et 13, **caractérisé en ce que** l'arbre du réacteur final (12) en disposition horizontale traverse chacun des couvercles situés sur les deux côtés par un seul orifice.

15. Dispositif selon la revendication 12, **caractérisé en ce que** les dispositifs permettant de mesurer, de manière continue, les propriétés du produit de la condensation chimique sont des instruments destinés à mesurer les propriétés rhéologiques, l'évolution du comportement face aux ondes de pression et/ou l'évolution des propriétés optiques.
